# EUROPÄISCHE PATENTSCHRIFT

(11) **EP 3 943 368 B1**
(45) Veröffentlichungstag und Bekanntmachung des Hinweises auf die Patenterteilung: **07.02.2024**
(21) Anmeldenummer: 21173450.4
(22) Anmeldetag: 12.05.2021
(51) Int. Cl.: B62D 5/00, B62D 6/00

(54) **ERZEUGEN VON LENKHANDHABEMOMENTEN ALS HAPTISCHE RÜCKMELDUNG BEI FAHRZEUGLENKSYSTEMEN**
GENERATION OF MANUAL STEERING TORQUE AS HAPTIC FEEDBACK IN VEHICLE STEERING SYSTEMS
GÉNÉRATION DU COUPLE DE DIRECTION EN TANT QUE RÉTROACTION HAPTIQUE DANS LES SYSTÈMES DE DIRECTION DE VÉHICULE

(30) Priorität: 28.05.2020 DE 102020206703
(43) Veröffentlichungstag der Anmeldung: 26.01.2022
(73) Patentinhaber: VOLKSWAGEN AG, 38440 Wolfsburg (DE)
(72) Erfinder: Heinrich, Felix, 38124 Braunschweig (DE); Dreyer, Dirk, 31655 Stadthagen (DE)

(56) Entgegenhaltungen:
- DE-A1-102009 000 638
- DE-A1-102017 222 952
- DE-A1-102018 123 615
- DE-A1-102019 214 305

## Beschreibung

Die Erfindung betrifft das Gebiet von Fahrzeuglenksystemen, insbesondere für Kraftfahrzeuge und ferner insbesondere für Personenkraftwagen oder Lastkraftwagen. Insbesondere betrifft die Erfindung ein Verfahren zum Erzeugen eines Lenkhandhabemoments (oder, mit anderen Worten, Rückkopplungsmoments) als haptische Rückmeldung an der Lenkhandhabe eines Fahrzeuglenksystems. Des Weiteren betrifft die Erfindung ein Lenksystem, das dazu eingerichtet ist, einen Aktor zum Erzeugen eines Soll-Handhabemoments anzusteuern sowie ein Steuergerät für ein solches Lenksystem.

Bei Fahrzeugen kommen oftmals Lenksysteme zum Einsatz, bei denen der Fahrer per Lenkhandhabebetätigung einen Fahrerlenkwunsch signalisiert. Daraufhin wird das tatsächlich wirksame Lenkmoment bzw. die Lenkkraft zumindest anteilig nicht durch den Fahrer, sondern mittels eines Aktors erzeugt. Bei sogenannten Steer-by-Wire-Systemen sind die Lenkhandhabe und das mit den Fahrzeugrädern gekoppelte Lenkgetriebe samt Aktor mechanisch entkoppelt. Hier wird nach Maßgabe der manuellen Lenkhandhabebetätigung das lenkwirksame Moment vollständig aktorisch erzeugt und auf das Lenkgetriebe aufgebracht.

Ferner existieren sogenannte Überlagerungslenkungen oder auch elektromechanische Lenksysteme. In diesem Fall sind sowohl ein Aktor als auch die vom Fahrer betätigte Lenkhandhabe mit dem Lenkgetriebe und somit auch zumindest mittelbar miteinander verbunden. Der Fahrer nimmt somit vom Aktor erzeugte Momente zumindest mittelbar als eine haptische Rückmeldung wahr. Es ist in diesem Zusammenhang auch bekannt, dass variable Übersetzungsverhältnisse z.B. über ein Planetengetriebe zwischen einer Lenkeingangswelle, mit der die Lenkhandhabe verbunden ist, und dem Lenkgetriebe vorgesehen sein können. Über einen Aktor, der das Übersetzungsverhältnis einstellt, kann dabei auch unabhängig von dem Aktor zur eigentlichen Lenkmomentenerzeugung (der z.B. ein mit einer Zahnstange gekoppeltes Ritzel antreibt) ein an der Lenkhandhabe als haptische Rückmeldung wirksames Moment eingestellt werden.

Bei Steer-by-Wire-Systemen entfällt dies aufgrund der mechanischen Entkopplung. Entsprechend ist dort an der Lenkhandhabe ein separater Aktor (insbesondere ein Elektromotor) vorgesehen, um an der Lenkhandhabe wirksame Momente aktorisch zu erzeugen und somit ein definiertes Lenkgefühl einzustellen. Der Aktor treibt aber nicht das Lenkgetriebe an. Insbesondere sollen durch diesen die Kräfte simuliert werden, die bei der ansonsten bestehenden mechanischen Kopplung mit dem Lenkgetriebe vorliegen würden.

In der DE 10 2018 123 615 A1 ist eine Lösung für Steer-by-Wire-Systeme beschrieben, bei der ohne Berücksichtigung einer im Lenkgetriebe wirksamen Kraft (Zahnstangenkraft) ein geeignetes aktorisches Lenkhandhabemoment zum Erzielen eines gewünschten Lenkgefühls eingestellt werden kann.

Es hat sich gezeigt, dass es mit dieser Lösung und auch mit sonstigen bekannten Systemen nicht immer in der gewünschten Weise gelingt, haptische Rückmeldungen und somit ein gewünschtes Lenkgefühl an der Lenkhandhabe einzustellen.

Aus der DE 10 2009 000 638 A1 ist ein Verfahren zum Erzeugen eines Lenkhandhabemoments eines Steer by Wire Lenksystem bekannt. Mittels einer Kennlinie, die von dem Lenkhandhabemoment und der Zahnstangenkraft abhängig ist, wird ein aktorisches Soll-Lenkhandhabenmoment bestimmt und auf dessen Basis das Lenkhandhabenmoment erzeugt.

Die DE 10 2019 214 305 A1 lehrt das Erzeugen eines Lenkradreaktionsmoments bei einem Steer-by-Wire-System, bei der ein Soll-Reaktionsdrehmoment auf Basis eines Versatzes bestimmt wird und der Erzeugung eines Lenkradreaktionsdrehmoments zugrunde gelegt wird.

Die DE 10 2017 222 952 A1 offenbart das Erstellen einer Referenz eines Lenkgefühls bei einem Steer-by-Wire-Lenksystem und die Adaption des Lenkgefühls über Skalierungsfaktoren.

Eine Aufgabe der vorliegenden Lösung ist es daher, das aktorische Erzeugen von haptischen Rückmeldungen an der Lenkhandhabe eines Fahrzeuglenksystems insbesondere in Form eines (rückkoppelnden) aktorischen Lenkhandhabemoments zu verbessern.

Diese Aufgabe wird durch die Gegenstände der beigefügten unabhängigen Ansprüche gelöst. Vorteilhafte Weiterbildungen ergeben sich aus den beigefügten abhängigen Ansprüchen. Die vorstehenden Erläuterungen und Merkmale können auch bei der vorliegenden Lösung vorgesehen sein bzw. auf diese zutreffen.

Allgemein wird vorgeschlagen, eine haptische Rückmeldung an der Lenkhandhabe durch ein aktorisches Lenkhandhabemoment zu erzeugen, wobei der Aktor bzw. das hiervon erzeugte

Moment mechanisch auf die Lenkhandhabe übertragbar ist, insbesondere aufgrund einer mechanischen Kopplung von Aktor und Lenkhandhabe. Dabei ist allgemein vorgesehen, die Erzeugung dieses Lenkhandhabemoments zu verbessern, insbesondere in der Weise, dass sich hiermit ein vom Fahrer als angemessen empfundenes Lenkgefühl einstellt. Genauer gesagt wird vorgeschlagen, das aktorische Lenkhandhabemoment zumindest anteilig mittels einer Kennlinie zu erzeugen, die eine Abhängigkeit des Lenkhandhabemoments von einer Zahnstangenkraft definiert. Diese Lösung ist prinzipiell sowohl bei Steer-by-Wire-Systemen als auch bei Überlagerungslenkungen einsetzbar.

Bei der Zahnstange handelt es sich bekannter Maßen um ein mechanisches Glied im Lenkgetriebe, das unter Einwirken rein aktorisch (bei Steer-by-Wire-Systemen) oder aber aktorisch und manuell (bei Überlagerungslenkungen) erzeugter Momente verlagert wird. Insbesondere wird die Zahnstange linear verlagert und verschwenkt dabei in bekannter Weise weitere mechanische Glieder des Lenkgetriebes, wodurch die Fahrzeugräder unter Einstellen eines Lenkwinkels verschwenkt werden. Letzteres erfolgt insbesondere um eine im Wesentlichen vertikale Raumachse.

Die erfindungsgemäße Lösung zeichnet sich dabei insbesondere dadurch aus, dass das aktorische Lenkhandhabemoment zum Einstellen eines Lenkgefühls auf Basis einer Zahnstangenkraft ermittelt wird. Dabei kann die Zahnstangenkraft in der nachstehend geschilderten Weise geschätzt und/oder modellbasiert ermittelt werden. Ein Vorteil ist, dass unter Berücksichtigung dieser Zahnstangenkraft ein besonders realistisches Lenkgefühl, das den tatsächlichen Betriebszustand und/oder mechanischen Widerstand des Lenkgetriebes abbildet, erzielt werden kann.

Weiter sieht die Erfindung in vorteilhafter Weise vor, das zu erzeugende aktorische Lenkhandhabemoment in Kenntnis der Zahnstangenkraft mittels einer Kennlinie zu bestimmen. Die Kennlinie definiert dabei den Zusammenhang oder, mit anderen Worten, die Abhängigkeit des Lenkhandhabemoments von der Zahnstangenkraft. Vorteile ergeben sich dabei hinsichtlich der Geschwindigkeit, da nur eine vergleichsweise geringe Rechendauer erforderlich ist, um die Kennlinie zum Ermitteln des zu erzeugenden Lenkhandhabemoments auszulesen.

Insbesondere schlägt die Erfindung ein Verfahren zum Erzeugen eines Lenkhandhabemoments als haptische Rückmeldung bzw. Rückkopplung an der Lenkhandhabe (insbesondere einem Lenkrad) eines Fahrzeuglenksystems vor, aufweisend die Merkmale des beigefügten Anspruchs 1 und u.a.:
- Erhalten eines Werts einer Zahnstangenkraft (beispielsweise aus einem Schätzer oder einem Modell);
- Ermitteln zumindest eines Anteils von einem (zu erzeugenden) aktorischen Soll-Lenkhandhabemoments mittels einer Kennlinie, die eine Abhängigkeit des Lenkhandhabemoments von der Zahnstangenkraft definiert;
- Erzeugen (oder auch Stellen) des Lenkhandhabemoments auf Basis des Soll-Lenkhandhabemoments mittels eines Aktors, der mechanisch mit der Lenkhandhabe verbunden ist.

Die Zahnstange kann Bestandteil eines Lenkgetriebes des Fahrzeuglenksystems der vorstehend geschilderten Art sein. Die Zahnstangenkraft wird dabei bevorzugt nicht direkt sensorisch gemessen, sondern mittels eines jeweils computerimplementierten Schätzers oder eines Modells bestimmt, die anderweitige sensorische Messgrößen erhalten.

Gemäß einer Variante wird ein Wert der Zahnstangenkraft mittels eines Schätzers (der z.B. eine Softwarekomponente oder eine allgemeine Funktion eines Steuergeräts des Fahrzeuglenksystems sein kann) ermittelt, der bevorzugt Betriebsgrößen eines mit der Zahnstange mechanisch gekoppelten Aktors (insbesondere eines Elektromotors) erhält. Hierbei kann es sich z.B. um einen Motorstrom von einem Motor handeln, der dazu eingerichtet ist, die Zahnstange durch Aufbringen eines Motormoments zu verlagern. Zusätzlich oder alternativ kann der Schätzer ein Modell des Lenkgetriebes umfassen, das beispielsweise ein von dem Motor erzeugtes Motormoment als eine Eingangsgröße erhält. Das Modell kann z.B. die Trägheit und/oder Reibung innerhalb des Lenksystems simulieren.

Gemäß einer anderen Variante wird die Zahnstangenkraft direkt mittels eines Zahnstangenkraft-Modells ermittelt. Dieses kann als Eingangsgrößen z.B. die Fahrzeuggeschwindigkeit und einen vom Fahrer eingestellten Lenkwinkel erhalten.

Die Kennlinie kann als eine mathematische Funktion beschrieben und/oder hinterlegt sein. Sie kann aber auch durch einen Datensatz und/oder eine Datentabelle definiert sein, in der bevorzugt Wertepaare von (Soll-) Lenkhandhabemoment und Zahnstangenkraft hinterlegt sind. Beispielsweise kann die Kennlinie in einer Speichereinrichtung eines nachstehend erläuterten Steuergeräts gespeichert sein.

Der Aktor zum Erzeugen des Lenkhandhabemoments kann ein Elektromotor sein. Es kann sich hierbei um denjenigen Aktor handeln, der in der vorstehend erläuterten Weise bei einer Überlagerungslenkung das Übersetzungsverhältnis einstellen kann. Es kann sich auch um denjenigen Aktor handeln, der bei einer Überlagerungslenkung die Zahnstange verlagert. Auch können beide der genannten Aktoren zumindest anteilig das Lenkhandhabemoment erzeugen. Im Fall einer Steer-by-Wire-Lenkung kann es sich um den Aktor handeln, der mechanisch mit der Lenkhandhabe gekoppelt ist, nicht aber mit der Zahnstange.

Allgemein können jegliche hierin geschilderten Ausführungen, Varianten und Erläuterungen sowohl auf eine Überlagerungslenkung als auch eine Steer-by-Wire-Lenkung zutreffen bzw. bei diesen vorgesehen sein, sofern nicht anders angegeben oder ersichtlich. Beansprucht wird vorliegend jedoch ausschließlich eine Steer-by-Wire-Lenkung.

Erfindungsgemäß ist ferner vorgesehen, dass das Fahrzeuglenksystem ferner dazu eingerichtet ist, ein Zahnstangenbetätigungsmoment oder, genauer gesagt, Lenkunterstützungsmoment mittels einer weiteren Kennlinie (z.B. einer Lenkunterstützungskennlinie) aktorisch zu erzeugen, wobei die Kennlinie eine Abhängigkeit des Lenkunterstützungsmoments von einem fahrererzeugten Lenkhandhabemoment (auch Handmoment genannt) definiert. Dabei ist vorgesehen, dass die vorstehend erläuterte Kennlinie betreffend die Zahnstangenkraft eine invertierte Variante dieser weiteren Kennlinie ist. Genauer gesagt ist ein Verlauf der (ersten) Kennlinie betreffend die Zahnstangenkraft invers zu dem Verlauf der weiteren Kennlinie. Unter dem Verlauf kann dabei allgemein die Art und/oder Form der Kennlinie verstanden werden, also ob diese beispielsweise linear, exponentiell, quadratisch, abflachend oder gesättigt verläuft. Insbesondere kann hierunter eine Änderungsrate oder ein Gradient der Kurve verstanden werden bzw. kann der Verlauf durch diese Größen definiert sein.

Allgemein kann die Kennlinie betreffend die Zahnstangenkraft in der Weise definiert sein, dass bei einer zunehmenden Zahnstangenkraft auch zunehmende aktorische (Soll-) Lenkhandhabemomente vorliegen. Hingegen kann bei der weiteren Kennlinie vorgesehen sein, dass bei niedrigen Fahrer-Lenkhandhabemomenten hohe Lenkunterstützungsmomente vorliegen, diese dann aber bei steigenden Fahrer-Lenkhandhabemomenten abnehmen. Dies entspricht den vorliegend erwähnten invertierten Verlauf der Kennlinien, in dem Sinne, dass der Zusammenhang zwischen dem jeweiligen Lenkhandhabemoment und der der weiteren der Kennlinie zugrundeliegenden Größe gegenläufig zueinander definiert ist. Vorteilhaft ist dies dahingehend, als dass die weitere Kennlinie zum Festlegen eines Lenkunterstützungsmoments für viele Lenksysteme bereits verfügbar ist oder aufwandsarm ermittelbar ist, sodass der Aufwand zum Definieren einer Kennlinie für das aktorische (Soll-) Lenkhandhabemoment geringer ausfallen kann. In bekannter Weise kann das Lenkunterstützungsmoment mechanisch auf das Lenkgetriebe einwirken bzw. eine Zahnstange verlagern.

Eine Weiterbildung sieht vor, dass als ein weiterer Anteil des (rückkoppelnden) aktorischen Soll-Lenkhandhabemoments ein Moment, das aus einer Dämpfung resultiert, und/oder ein Moment, das aus Reibung resultiert, ermittelt wird. Die Dämpfung und die Reibung können jeweils im Lenkgetriebe vorliegen bzw. die dortigen Dämpfungs- und Reibungsverhältnisse simulieren. Allgemein können jegliche hierin erwähnten Anteile des aktorischen (Soll-) Lenkhandhabemoments im Wesentlichen zeitgleich ermittelt werden und dann z.B. über einen Summenknoten aufsummiert werden. Das resultierende aufsummierte aktorische (Soll-) Lenkhandhabemoment bildet dann eine Soll-Größe zur Umsetzung durch den Aktor.

Die aus der Dämpfung und/oder Reibung resultierenden Momente können ebenfalls mittels einer jeweiligen Kennlinie oder einem Modell ermittelt werden. Diese können als Eingangsgröße jeweils eine Lenkwinkeländerung insbesondere an der Lenkhandhabe und/oder einer hiermit verbundenen Lenkeingangswelle erhalten. Die Reibung bzw. das hieraus resultierende Moment kann mit zunehmender Lenkwinkeländerung zunehmen, sich aber dann bevorzugt einem Sättigungswert annähern. Die Dämpfung bzw. das hieraus resultierende Moment kann ebenfalls mit zunehmender Lenkwinkeländerung zunehmen, insbesondere proportional. Insbesondere kann also vorgesehen sein, dass die Ermittlung der aus Reibung und/oder Dämpfung resultierenden Momente jeweils mittels einer Kennlinie erfolgt, die eine Abhängigkeit des Moments von der Dämpfung und/oder Reibung definiert.

Durch das Berücksichtigen von aus Dämpfung und Reibung resultierenden Momentenanteilen kann ein noch realistischeres Lenkgefühl eingestellt werden. Durch das Verwenden von

Kennlinien ergeben sich dabei erneut Vorteile hinsichtlich einer erhöhten Rechengeschwindigkeit bzw. einem reduzierten Berechnungsaufwand.

Gemäß einer weiteren Variante wird als ein noch weiterer Anteil des aktorischen Soll-Lenkhandhabemoments ein Rückstellmoment ermittelt, mit dem die Lenkhandhabe in eine vorbestimmte Stellung rückstellbar ist. Diese Stellung kann insbesondere einer neutralen Stellung bei einer Geradeausfahrt entsprechen. Auch hierdurch wird noch einmal das Lenkgefühl verbessert.

Prinzipiell kann die Soll-Lenkhandhabe per Steuerung eingestellt werden bzw. eine Steuergröße sein. Erfindungsgemäß wird das aktorische (Soll-) Lenkhandhabemoment aber als Sollgröße einer Regelung zum Erzeugen eines an der Lenkhandhabe wirksamen Moments verwendet. Genauer gesagt wird es als ein Soll-Lenkhandhabemoment verwendet, um das aktorisch erzeugte (rückkoppelnde) Moment einzuregeln. Durch eine entsprechende Einregelung wird die Genauigkeit beim Einstellen des Lenkgefühls bzw. eines als angemessen empfundenen Rückkopplungsmoments verbessert.

Ferner kann vorgesehen sein, dass als eine Ist-Größe der Regelung ein an der Lenkhandhabe wirksames Moment sensorisch erfasst wird. Dieses kann sich aus dem vom Fahrer aufgebrachten Handmoment und/oder einem bereits wirksamen aktorischen Lenkhandhabemoment zusammensetzen.

Gemäß einer weiteren Variante ist die Regelung eine Zustandsregelung, die als Zustandsgrößen bevorzugt einen Lenkhandhabewinkel und/oder das sensorisch erfasste Moment (insbesondere das Handhabemoment) erhält. Es hat sich gezeigt, dass sich eine solche Zustandsregelung besonders gut für das Einstellen eines gewünschten Lenkgefühls eignet. Alternativ kann auch ein PID-Regler zum Einsatz kommen.

Jegliche hierin geschilderten Regler, Regelungen oder Regelfunktionen können von einem Steuergerät, insbesondere des Aktors, bereitgestellt werden, das beispielsweise über Softwarefunktionen zum Bereitstellen entsprechender Funktionalitäten verfügt.

Die Erfindung betrifft auch ein Lenksystem für ein Fahrzeug, mit den Merkmalen des beigefügten Anspruchs 8 und u.a. mit:
- einer Lenkhandhabe, insbesondere einem Lenkrad, mittels der z.B. ein Fahrerlenkwunsch vorgebbar ist;
- einem mechanisch mit der Lenkhandhabe verbundenen Aktor (insbesondere einen Elektromotor, der aber nicht zwingend mit der Zahnstange verbunden ist oder allgemein mit einem Lenkgetriebe);
- einer Zahnstange, insbesondere als Bestandteil eines Lenkgetriebes, das mit den Fahrzeugrädern gekoppelt ist;
- einem (insbesondere digitalen und/der elektronischen) Steuergerät, das dazu eingerichtet ist, mittels einer Kennlinie zumindest einen Anteil von einem aktorischen Soll-Lenkhandhabemoment zu ermitteln, wobei die Kennlinie eine Abhängigkeit des Soll-Lenkhandhabemoments von einer Zahnstangenkraft definiert;
und das dazu eingerichtet ist, den Aktor zum Erzeugen des Soll-Lenkhandhabemoments anzusteuern.

Das Steuergerät kann eine Prozessoreinrichtung und/oder eine Speichereinrichtung umfassen. Auf der Speichereinrichtung können Programmanweisungen hinterlegt sein, die bei Ausführung durch die Prozessoreinrichtung das Steuergerät zu jeglichen hierin geschilderten Funktionen und Maßnahmen veranlassen. Das Ansteuern des Aktors kann insbesondere das Ansteuern von dessen Leistungselektronik umfassen.

Ferner betrifft die Erfindung auch ein Steuergerät für ein Lenksystem nach dem vorangehenden Aspekt.

Allgemein können das Lenksystem und das Steuergerät dazu eingerichtet sein, ein Verfahren gemäß jeglichem hierin geschilderten Aspekt auszuführen. Sie können jegliche weiteren Merkmale, Weiterbildungen und Varianten umfassen, um sämtliche hierin geschilderten Betriebszustände, Verfahrensmaßnahmen oder Effekte bereitzustellen. Insbesondere können sämtliche Ausführungen zu und Weiterbildungen von Verfahrensmerkmalen auch auf gleichlautende oder gleichartige Merkmale des Lenksystems und des Steuergeräts zutreffen bzw. bei diesen vorgesehen sein.

Ausführungsbeispiele der Erfindung werden im Folgenden anhand der beigefügten schematischen Figuren erläutert.
- Fig. 1: zeigt ein Lenksystem gemäß einem Ausführungsbeispiel der Erfindung.
- Fig. 2: zeigt ein von dem Lenksystem umgesetztes Regelungsschema in einer schematischen Darstellung.
- Fig. 3: zeigt ein Ablaufschema eines beispielhaften erfindungsgemäßen Verfahrens, wie es von dem Lenksystem aus Fig. 1 ausgeführt wird.

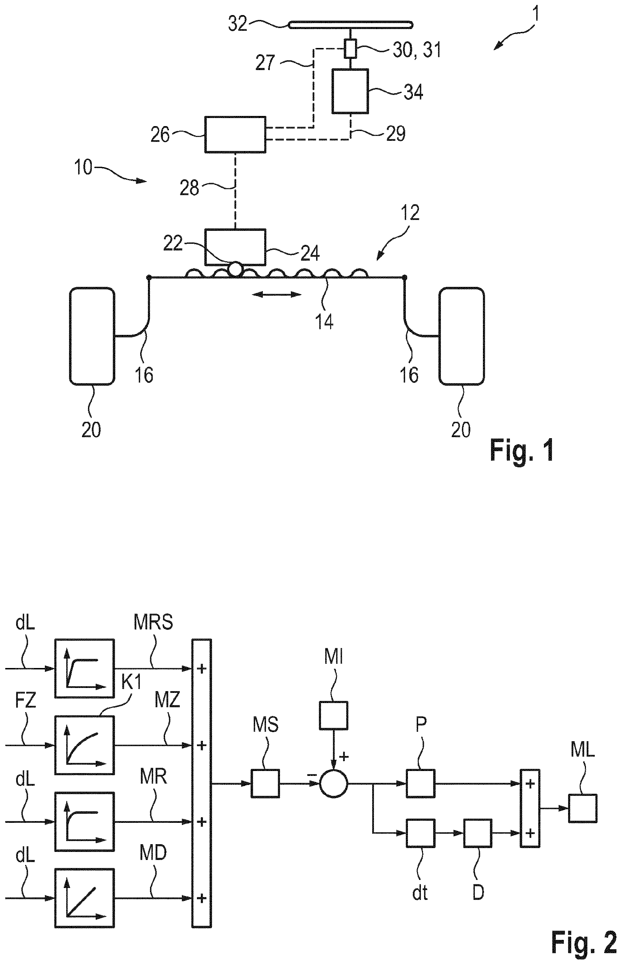

In Fig. 1 ist ein Lenksystem 10 eines ansonsten nicht näher dargestellten Fahrzeugs 1 gezeigt. Das Lenksystem 10 ist ein Steer-by-Wire-System. Es umfasst ein Lenkgetriebe 12 mit einer Zahnstange 14. Die Zahnstange 14 ist über nicht näher gezeigte weitere Glieder 16 des Lenkgetriebes 12 mit den Fahrzeugrädern 20 einer Vorderachse des Fahrzeugs 1 verbunden. Mit der Zahnstange 14 in Eingriff steht ein Ritzel 22 eines Aktors 24, der ein Elektromotor ist (im Folgenden als Motor 24 bezeichnet). Der Motor 24 treibt das Ritzel 22 an, sodass es um eine senkrecht auf der Blattebene stehende Rotationsachse rotiert. Infolge dessen ist die Zahnstange 14 linear gemäß dem gezeigten Doppelpfeil verlagerbar, was mittels der mechanischen Glieder 16 in an sich bekannter Weise in Rotationen der Fahrzeugräder 20 zum Einstellen eines Lenkwinkels übertragbar ist.

Das Lenksystem 10 umfasst auch ein Steuergerät 26. Dieses ist über eine gestrichelt angedeutete Verbindung 28 mit dem Motor 24 verbunden, um an diesen Steuersignale zum Betätigen der Zahnstange 14 zu übermitteln. Ferner ist das Steuergerät 26 mit einem Sensor 30 verbunden (siehe Datenleitung 27), der mechanisch mit einer Lenkhandhabe 32 (einem Lenkrad) gekoppelt ist. Der Sensor 30 ist dazu eingerichtet, einen mit der Lenkhandhabe 32 vorgegebenen Lenkwinkel und insbesondere eine Änderung hiervon zu erfassen und an das Steuergerät 26 zu übermitteln. Dieses kann daraufhin den Motor 24 zum Einstellen des vorgegebenen Lenkwinkels ansteuern.

Die Lenkhandhabe 32 ist mit dem Lenkgetriebe 12 nicht mechanisch verbunden und insbesondere nicht mit der Zahnstange 14. Allerdings ist sie mit einem weiteren Aktor 34 (wiederum in Form eines Elektromotors) verbunden. Der Elektromotor 34 ist dazu eingerichtet, als eine haptische Rückmeldung ein aktorisches Lenkhandhabemoment zu erzeugen, das auf die Lenkhandhabe 32 einwirkt. Letzteres kann wiederum unter einer Steuerung durch das Steuergerät 26 erfolgen. Eine entsprechende Datenleitung 29 ist gestrichelt gezeigt. Sämtliche Datenleitungen 27, 28, 29 können von einem Kommunikationsbus umfasst sein.

Im Betrieb ist das Steuergerät 26 dazu eingerichtet, einen Zahnstangenkraftwert zu ermitteln, beispielsweise mittels eines vorstehend genannten Schätzers und/oder eines Modells. Hierfür kann das Steuergerät die im allgemeinen Beschreibungsteil jeweils genannten Eingangsgrößen des Schätzers oder des Modells erhalten, beispielsweise durch Verbindung zu weiteren diese Größen messenden Sensoren. Weiter ist in dem Steuergerät 26 eine Kennlinie hinterlegt, die das mit dem Aktor 34 zu erzeugende Soll-Lenkhandhabemoment in Abhängigkeit einer Zahnstangenkraft definiert. Das Steuergerät 26 ist dazu eingerichtet, den Aktor 34 nach Ermitteln des entsprechenden Zahnstangenkraftwerts zum Erzeugen des per Kennlinie definierten Soll-Lenkhandhabemoments anzusteuern.

Wie anhand von Fig. 2 gezeigt, erfolgt dies vorliegend bevorzugt im Rahmen einer Regelung, die durch das Steuergerät 26 ausgeführt wird.

Weiter ist das Steuergerät 26 aber auch dazu eingerichtet, nach Maßgabe der vom Sensor 30 erhaltenden Werte mittels einer weiteren Kennlinie ein Lenkunterstützungsmoment zu ermitteln, das von dem Motor 24 zu erzeugen und auf die Zahnstange 14 aufzubringen ist. Die genannten Kennlinien können sich dabei in der vorstehend geschilderten Weise voneinander unterscheiden, in der Weise, dass sie invertiert zueinander verlaufen

In Fig. 2 ist ein Regelungsschema gezeigt, wie es das Steuergerät 26 zum Erzeugen des Lenkhandhabemoments ML mit dem Aktor 34 und dadurch zum Bereitstellen eines definierten Lenkgefühls ausführt. Dabei werden zunächst Anteile von einem aktorischen Soll-Lenkhandhabemoment MS ermittelt, wobei dieses Soll-Lenkhandhabemoment MS eine Sollgröße der Regelung darstellt. Das resultierende bzw. tatsächlich nach Maßgabe der Regelung vom Aktor 34 gestellte Lenkhandhabemoment ist als resultierendes Lenkhandhabemoment ML bezeichnet.

Die Anteile des (Soll-)Lenkhandhabemoments MS sind ein Rückstellmoment MRS, ein Zahnstangenmoment MZ, ein Reibungsmoment MR und ein Dämpfungsmoment MD. Diese Momente stellen jeweils Momente dar, die aus den genannten Größen oder physikalischen Zusammenhängen resultieren und vom Fahrer bei einer herkömmlichen Betätigung des Lenkgetriebes 12 an der Lenkhandhabe 32 (also bei einer mechanischen Verbindung zwischen Lenkhandhabe 32 und Lenkgetriebe 12) erwartungsgemäß wahrnehmbar wären.

Im Einzelnen gezeigt ist dabei, dass das aktive Rückstellmoment MRS dadurch erhalten wird, dass die vom Sensor 30 gemessene Lenkwinkeländerung dL einer Kennlinie zugeführt wird, mit der das Moment MRS erhalten wird. Diese und auch die weiteren in Fig. 2 gezeigten Kennlinien tragen die Eingangsgröße dabei jeweils entlang der Abszisse auf und den erhaltenen Momentenanteil bzw. das jeweilige Moment entlang der Ordinate.

Das aus der Zahnstangenkraft resultierende Moment MZ wird mittels einer Kennlinie K1 ermittelt. Diese erhält als Eingangsgröße die Zahnstangenkraft FZ, die in der vorstehend geschilderten Weise aus einem Modell oder einem Schätzer erhalten bzw. gewonnen wird. Das aus der Reibung erhaltene Moment MR wird mittels einer Kennlinie bestimmt, die als Eingangsgröße wiederum die Lenkwinkeländerung dL erhält. Gleiches gilt für das Dämpfungsmoment MD. Sämtliche Kennlinien mit Ausnahme derjenigen des Dämpfungsmoments MD verlaufen dabei nach einer anfänglichen starken Steigung abflachend bzw. gesättigt und insbesondere logarithmisch. Für das Dämpfungsmoment MD ist hingegen bevorzugt eine proportionale Kennlinie vorgesehen.

Die jeweils erhaltenen Momentenanteile MRS, MZ, MR, MD werden zu dem Soll-Lenkhandhabemoment MS aufsummiert. Ferner wird mittels eines Drehmomentensensors 31, der in den Sensor 30 einer Lenkhandhabe 32 integriert oder aber gesondert bereitgestellt sein kann, ein an der Lenkhandhabe 32 wirksames Ist-Moment Ml gemessen. Hierbei handelt es sich um das aktuell an der Lenkhandhabe 32 wirksame Moment, das sich aus einem Handmoment des Fahrers und einem aktuell vorliegenden aktorischen Moment des Aktors 34 zusammensetzt. In an sich bekannter Weise wird aus dem Ist-Moment MI und dem Soll-Moment MS eine Regelabweichung gebildet. Diese wird einem schematisch angedeuteten Regler nach Art eines PID-Reglers zugeführt, der in bekannter Weise als Ausgangs- bzw. Stellgröße dann das bereits erwähnte finale bzw. resultierende Lenkhandhabemoment ML ausgibt, das von dem Aktor 34 gestellt wird.

Wie vorstehend erwähnt, kann neben dem beispielhaft gezeigten PID-Regler auch ein Zustandsregler vorgesehen sein. Als Zustandsgrößen kann dann neben dem Ist-Moment Ml auch wenigstens eine der folgenden Größen als Zustandsgrößen berücksichtigt und insbesondere rückgeführt werden: die zeitliche Ableitung von MI, das Drehmoment ML des Aktors, der Drehwinkel des Aktors.

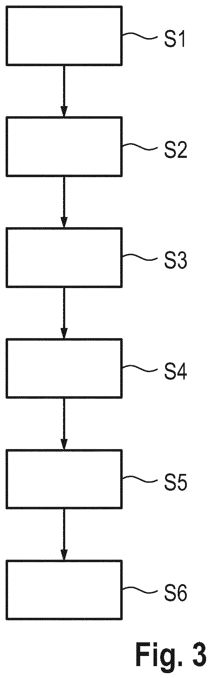

In Fig. 3 ist ein Ablaufschema eines erfindungsgemäßen Verfahrens gezeigt, wie es in der vorstehend geschilderten Weise von dem Lenksystem 10 ausgeführt wird.

In einem Schritt S1 wird das (Soll-)Lenkhandhabemoment MS bestimmt. Hierzu wird die Zahnstangenkraft FZ in der geschilderten Weise erhalten bzw. ermittelt. Gleichzeitig oder parallel hierzu (oder auch vorangehend) werden im Schritt S2 die Lenkwinkeländerungen dL ermittelt. Daraufhin werden im Schritt S3 die Momentenanteile MRS, MZ, MR und MD bestimmt. Die exakte Ausführungsreihenfolge der Schritte S1 bis S3 ist nicht entscheidend. Insbesondere können die Momentenanteile MRS, MZ, MR und MD auch geringfügig zeitlich versetzt zueinander oder aber im Wesentlichen zeitgleich ermittelt werden. In einem Schritt S4 wird durch Aufsummieren der Momentenanteile MRS, MZ, MR, MD das Soll-Lenkhandhabemoment MS erhalten. Dieses wird in einem Schritt S5 von einem sensorisch gemessenen Ist-Moment MI subtrahiert und dem PID-Regler aus Fig. 2 zugeführt. Das daraufhin erhaltene resultierende Lenkhandhabemoment ML wird im Schritt S6 unter Ansteuerung durch das Steuergerät 26 vom Aktor 34 gestellt.

### Bezugszeichenliste

- 1: Fahrzeug
- 10: Fahrzeugsystem
- 12: Lenkgetriebe
- 14: Lenkstange
- 16: mechanisches Glied
- 20: Fahrzeugrad
- 22: Ritzel
- 24: Motor
- 26: Steuergerät
- 27, 28, 29: Datenverbindung
- 30, 31: Sensor
- 32: Lenkhandhabe
- 34: Aktor
- MS: (Soll-)Lenkhandhabemoment
- MI: Ist-Moment
- ML: resultierendes Lenkhandhabemoment
- MRS: Rückstellmoment
- MZ: Moment aus Zahnstangenkraft
- MR: Moment aus Reibung
- MD: Moment aus Dämpfung
- FZ: Zahnstangenkraft
- dL: Lenkwinkeländerung
- K1: Kennlinie

## Patentansprüche

1. Verfahren zum Erzeugen eines Lenkhandhabemoments (ML) als haptische Rückmeldung an der Lenkhandhabe (32) eines Steer-by-Wire-Fahrzeuglenksystems (10), aufweisend:
• Erhalten eines Werts einer Zahnstangenkraft (FZ);
• Ermitteln zumindest eines Anteils (MZ) von einem aktorischen Soll-Lenkhandhabemoment (MS) mittels einer Kennlinie (K1), die eine Abhängigkeit des Lenkhandhabemoments (MS) von der Zahnstangenkraft (FZ) definiert;
• Erzeugen eines Lenkhandhabemoments (ML) auf Basis des Soll-Lenkhandhabemoments (MS) mittels eines Aktors (34), der mechanisch mit der Lenkhandhabe (32) verbunden ist, **dadurch gekennzeichnet, dass**
das Steer-by-Wire-Fahrzeuglenksystem (10) ferner dazu eingerichtet ist, ein mittels einer weiteren Kennlinie ermitteltes Lenkunterstützungsmoment aktorisch zu erzeugen, die eine Abhängigkeit des Lenkunterstützungsmoments von einem fahrererzeugten Lenkhandhabemoment definiert,
wobei ein Verlauf der Kennlinie (K1) betreffend die Zahnstangekraft (FZ) invers zu dem Verlauf dieser weiteren Kennlinie ist,
wobei das aktorische Soll-Lenkhandhabemoment (MS) als Sollgröße einer Regelung zum Erzeugen eines an der Lenkhandhabe (32) wirksamen Moments verwendet wird.

2. Verfahren nach Anspruch 1,
**dadurch gekennzeichnet, dass** als ein weiterer Anteil des Soll-Lenkhandhabemoments (MS) ein Moment (MD), das aus einer Dämpfung resultiert, und/oder ein Moment (MR), das aus Reibung resultiert, ermittelt wird.

3. Verfahren nach Anspruch 2,
**dadurch gekennzeichnet, dass** die Ermittlung mittels einer Kennlinie erfolgt, die eine Abhängigkeit des Moments (MD, MR) von der Dämpfung und/oder Reibung definiert.

4. Verfahren nach einem der vorangehenden Ansprüche,
**dadurch gekennzeichnet, dass** als ein weiterer Anteil des aktorischen Soll-Lenkhandhabemoments (MS) ein Rückstellmoment (MRS) ermittelt wird, mit dem die Lenkhandhabe (32) in eine vorbestimmte Stellung rückstellbar ist.

5. Verfahren nach einem der vorangehenden Ansprüche,
**dadurch gekennzeichnet, dass** als eine Ist-Größe der Regelung ein an der Lenkhandhabe (32) wirksames Moment (MI) sensorisch erfasst wird.

6. Verfahren nach Anspruch 5,
**dadurch gekennzeichnet, dass** die Regelung eine Zustandsregelung ist, die als Zustandsgrößen einen Lenkhandhabewinkel und das sensorisch erfasste Moment (MI) erhält.

7. Steer-by-Wire-Fahrzeuglenksystem (10) für ein Fahrzeug (1), mit:
- einer Lenkhandhabe (32);
- einem mechanisch mit der Lenkhandhabe (32) verbundenen Aktor (34);
- einer Zahnstange (14);
- einem Steuergerät (26), das dazu eingerichtet ist, mittels einer Kennlinie (K1) zumindest einen Anteil (MZ) von einem aktorischen Soll-Lenkhandhabemoment (MS) zu ermitteln, wobei die Kennlinie (K1) eine Abhängigkeit des Soll-Lenkhandhabemoments (MS) von einer Zahnstangenkraft (FZ) definiert;
und das dazu eingerichtet ist, den Aktor (34) zum Erzeugen des Soll-Lenkhandhabemoments (MS) anzusteuern,
**dadurch gekennzeichnet, dass**
das Steer-by-Wire-Fahrzeuglenksystem (10) ferner dazu eingerichtet ist, ein mittels einer weiteren Kennlinie ermitteltes Lenkunterstützungsmoment aktorisch zu erzeugen, die eine Abhängigkeit des Lenkunterstützungsmoments von einem fahrererzeugten Lenkhandhabemoment definiert,
wobei ein Verlauf der Kennlinie (K1) betreffend die Zahnstangekraft (FZ) invers zu dem Verlauf dieser weiteren Kennlinie ist,
und dazu eingerichtet ist, das aktorische Soll-Lenkhandhabemoment (MS) als Sollgröße einer Regelung zum Erzeugen eines an der Lenkhandhabe (32) wirksamen Moments (ML) zu verwenden, und den Aktor (34) zum Erzeugen dieses an der Lenkhandhabe (32) wirksamen Moments (ML) anzusteuern.

8. Steuergerät (26),
für ein Lenksystem (10) nach Anspruch 7.

## Claims

1. Method for generating a steering-handle torque (ML) as haptic feedback at the steering handle (32) of a steer-by-wire vehicle steering system (10), comprising:
• obtaining a value for a toothed rack force (FZ);
• ascertaining at least one proportion (MZ) of an actoric setpoint steering-handle torque (MS) by means of a characteristic curve (K1), which defines a dependency of the steering-handle torque (MS) on the toothed rack force (FZ);
• generating a steering-handle torque (ML) on the basis of the setpoint steering-handle torque (MS) by means of an actuator (34), which is mechanically connected to the steering handle (32),
**characterized in that**
the steer-by-wire vehicle steering system (10) is also configured to actorically generate a steering assistance torque that is ascertained by means of a further characteristic curve and defines a dependency of the steering-assistance torque on a driver-generated steering-handle torque,
wherein a curve of the characteristic curve (K1) relating to the toothed rack force (FZ) is inverse to the curve of this further characteristic curve, wherein the actoric setpoint steering-handle torque (MS) is used as setpoint variable of a closed-loop control for generating a torque active on the steering handle (32).

2. Method according to Claim 1,
**characterized in that** a torque (MD) resulting from damping, and/or a torque (MR) resulting from friction, is ascertained as a further proportion of the setpoint steering-handle torque (MS).

3. Method according to Claim 2,
**characterized in that** the ascertainment is carried out by means of a characteristic curve which defines a dependency of the torque (MD, MR) on the damping and/or friction.

4. Method according to one of the preceding claims,
**characterized in that** a restoring torque (MRS) which makes it possible to return the steering handle (32) to a predetermined position is ascertained as a further proportion of the actoric setpoint steering-handle torque (MS).

5. Method according to one of the preceding claims,
**characterized in that** an actual variable of the closed-loop control measured by a sensor is a torque (MI) active on the steering handle (32).

6. Method according to Claim 5,
**characterized in that** the closed-loop control is a state closed-loop control which obtains a steering handle angle and the torque (MI) measured by a sensor as state variables.

7. Steer-by-wire vehicle steering system (10) for a vehicle (1), comprising:
- a steering handle (32);
- an actuator (34) mechanically connected to the steering handle (32);
- a toothed rack (14);
- a controller (26), which is configured to ascertain at least one proportion (MZ) of an actoric setpoint steering-handle torque (MS) by means of a characteristic curve (K1), wherein the characteristic curve (K1) defines a dependency of the setpoint steering-handle torque (MS) on the toothed rack force (FZ);
and which is configured to actuate the actuator (34) to generate the setpoint steering-handle torque (MS),
**characterized in that**
the steer-by-wire vehicle steering system (10) is also configured to actorically generate a steering-assistance torque that is ascertained by means of a further characteristic curve and defines a dependency of the steering-assistance torque on a driver-generated steering-handle torque,
wherein a curve of the characteristic curve (K1) relating to the toothed rack force (FZ) is inverse to the curve of this further characteristic curve, and is configured to use the actoric setpoint steering-handle torque (MS) as setpoint variable of a closed-loop control for generating a torque (ML) active on the steering handle (32), and to actuate the actuator (34) to generate this torque (ML) active on the steering handle (32).

8. Controller (26),
for a steering system (10) according to Claim 7.

## Revendications

1. Procédé de génération d'un couple de manette de direction (ML) en tant que retour haptique sur la manette de direction (32) d'un système de direction de véhicule à commande électrique (10), présentant :
- l'obtention d'une valeur d'une force de crémaillère (FZ) ;
- la détermination d'au moins une partie (MZ) d'un couple de manette de direction de consigne (MS) d'actionnement au moyen d'une courbe caractéristique (K1) qui définit une dépendance du couple de manette de direction (MS) par rapport à la force de crémaillère (FZ) ;
- la génération d'un couple de manette de direction (ML) sur la base du couple de manette de direction de consigne (MS) au moyen d'un actionneur (34) qui est relié mécaniquement à la manette de direction (32),
**caractérisé en ce que**
le système de direction de véhicule à commande électrique (10) est en outre adapté pour générer par actionnement un couple d'assistance de direction déterminé au moyen d'une autre courbe caractéristique, qui définit une dépendance du couple d'assistance de direction par rapport à un couple de manette de direction généré par le conducteur,
une allure de la courbe caractéristique (K1) concernant l'effort de crémaillère (FZ) étant inverse à l'allure de cette autre courbe caractéristique,
le couple de manette de direction de consigne (MS) d'actionnement étant utilisé en tant que grandeur de consigne d'une régulation pour générer un couple agissant sur la manette de direction (32).

2. Procédé selon la revendication 1,
**caractérisé en ce qu'**un couple (MD) qui résulte d'un amortissement et/ou un couple (MR) qui résulte d'un frottement est déterminé en tant qu'une autre partie du couple de manette de direction de consigne (MS).

3. Procédé selon la revendication 2,
**caractérisé en ce que** la détermination est effectuée au moyen d'une courbe caractéristique qui définit une dépendance du couple (MD, MR) par rapport à l'amortissement et/ou au frottement.

4. Procédé selon l'une quelconque des revendications précédentes,
**caractérisé en ce qu'**un couple de rappel (MRS) avec lequel la manette de direction (32) peut être ramenée dans une position prédéterminée est déterminé en tant qu'une autre partie du couple de consigne de manette de direction (MS) d'actionnement.

5. Procédé selon l'une quelconque des revendications précédentes,
**caractérisé en ce qu'**un couple (MI) agissant sur la manette de direction (32) est détecté par capteur en tant que grandeur réelle de la régulation.

6. Procédé selon la revendication 5,
**caractérisé en ce que** la régulation est une régulation d'état qui reçoit en tant que grandeurs d'état un angle de manette de direction et le couple (MI) détecté par capteur.

7. Système de direction de véhicule à commande électrique (10) pour un véhicule (1), avec :
- une manette de direction (32) ;
- un actionneur (34) relié mécaniquement à la manette de direction (32) ;
- une crémaillère (14) ;
- un appareil de commande (26) qui est adapté pour déterminer au moyen d'une courbe caractéristique (K1) au moins une partie (MZ) d'un couple de manette de direction de consigne (MS) d'actionnement, la courbe caractéristique (K1) définissant une dépendance du couple de manette de direction de consigne (MS) par rapport à une force de crémaillère (FZ) ;
et qui est adapté pour commander l'actionneur (34) pour générer le couple de manette de direction de consigne (MS),
**caractérisé en ce que**
le système de direction de véhicule à commande électrique (10) est en outre adapté pour générer par actionnement un couple d'assistance de direction déterminé au moyen d'une autre courbe caractéristique qui définit une dépendance du couple d'assistance de direction par rapport à un couple de manette de direction généré par le conducteur,
une allure de la courbe caractéristique (K1) concernant la force de crémaillère (FZ) étant inverse à l'allure de cette autre courbe caractéristique,
et est adapté pour utiliser le couple de manette de direction de consigne (MS) d'actionnement en tant que grandeur de consigne d'une régulation pour générer un couple (ML) agissant sur la manette de direction (32), et pour commander l'actionneur (34) pour générer ce couple (ML) agissant sur la manette de direction (32).

8. Appareil de commande (26),
pour un système de direction (10) selon la revendication 7.
